# EUROPEAN PATENT APPLICATION

(11) **EP 0 869 668 A1**
(43) Date of publication of application: **07.10.1998**
(21) Application number: 97305394.5
(22) Date of filing: 18.07.1997
(51) Int. Cl.: H04N 5/225

(54) **Instant CCD camera**

(30) Priority: 01.04.1997 CN 97202606
(71) Applicant: Ma, Hsi-Kuang, Taipei (TW)
(72) Inventor: Ma, Hsi-Kuang, Taipei (TW)
(74) Representative: Loven, Keith James

(57) **Abstract**

A CCD camera including a camera body (1), a connecting wire (2), a CCD lens (3), and a connecting device (4). The camera body is a box structure accommodating conventional circuits and memories, and a push button at an outer wall. The camera body further has a hole at another wall. The connecting wire contains lead wires joined to the circuits in the camera body at one end and the CCD lens at the other end. The CCD lens is separated from the camera body, and is attached to the user by means of a connecting device.

## Description

### BACKGROUND OF THE INVENTION

### (a) Field of the Invention:

The present invention relates to an electronic camera, for example a CCD camera.

### (b) Description of the Prior Art:

The use of multimedia in computers has permitted a considerable breakthrough in telecommunications or video communications. In particular, the use of electronic cameras, such as those based on CCD (charge coupled device) imaging devices, has advanced the carrying, storage and transmission of video images. Therefore, electronic cameras have gradually replaced conventional photographic apparatuses.

When using a CCD camera in taking a picture, the image taken is stored in the memory and not on photographic film, and the image may be output from the computer at any time and may be stored for a long time. In developing the picture, the picture is formed by a pin hole or a lens, and the image is transmitted to a photo-sensitive electronic semiconductor in the CCD. The semiconductor converts the image signal into a TTL, which may be stored in the memory.

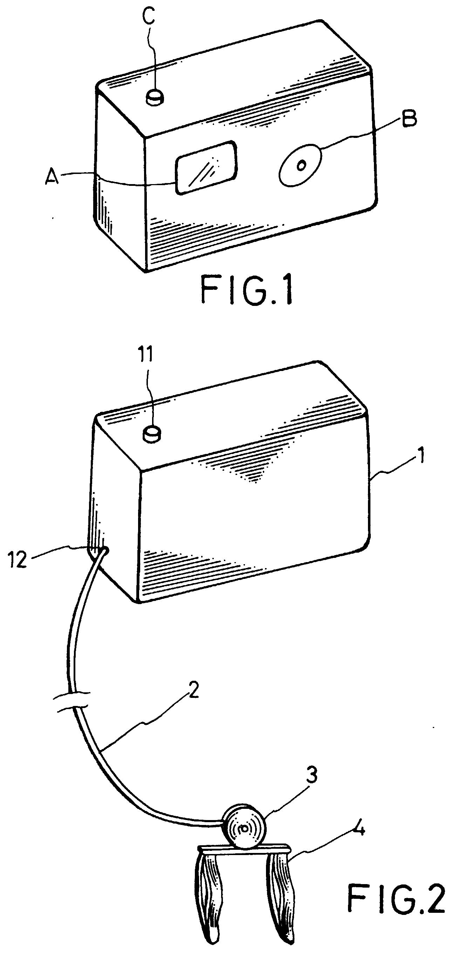

A conventional CCD electronic camera is essentially as the one shown in Fig. 1 and basically comprises a box including circuits and memory accommodated therein. A viewfinder A and a CCD lens B are disposed at the front side, while a push button C is provided at the upper side to serve as a switch. In use, the user views through the viewfinder A to catch an image and then presses the push button C. The image will then enter via the CCD lens B into the memory to accomplish the taking of a picture.

Such a camera may achieve its effect of taking pictures at relatively slow-moving occasions. But at occasions where opportunities to take pictures soon pass, such as in covering a news story, it is necessary not only to be always ready to catch a picture, but also to conceal the camera. With conventional CCD cameras, it apparently cannot achieve the desirable effects.

### SUMMARY OF THE INVENTION

Accordingly, it is a primary object of the present invention to provide an electronic camera which may be used to take instantaneous pictures and may be used in occasions where secret picture taking is necessary.

### BRIEF DESCRIPTION OF THE DRAWINGS

The foregoing and other features and advantages of the present invention will be more clearly understood from the following detailed description and the accompanying drawings, in which:
Fig. 1 is a schematic view of a conventional CCD camera;
Fig. 2 is a schematic elevational view of the present invention; and
Fig. 3 is a schematic view of a preferred embodiment of the present invention.

### DETAILED DESCRIPTION OF THE PREFERRED EMBODIMENT

As shown in the drawings, basically, the camera according to the present invention comprises a camera body 1, a connecting wire 2, a CCD lens 3, and a coupling device 4.

The camera body 1 is a box structure having therein the conventional memory and circuit devices, as well as a conventional push button 11 to serve as the switch, which will not be described in detail herein since it is well known in the art. The distinguishing feature of the invention resides in that a hole 12 is formed in a wall for passage of the connecting wire 2.

The connecting wire 2 contains lead wires for transmitting the images obtained by the CCD lens 3 to the camera body 1 for storage. Therefore, the length of the connecting wire 2 may be varied according to situations.

The CCD lens 3 is known in the art. It is connected to the connecting wire 2 and further extends to the camera body 1 for catching images.

The connecting device 4 is provided below the CCD lens 3. As shown in the preferred embodiment of the present invention, it is a clamping device. But in actual practice, it may be a tying band, adhesive tape, etc. The purpose is to attach or secure the CCD lens 3 to a position to achieve stability when taking pictures.

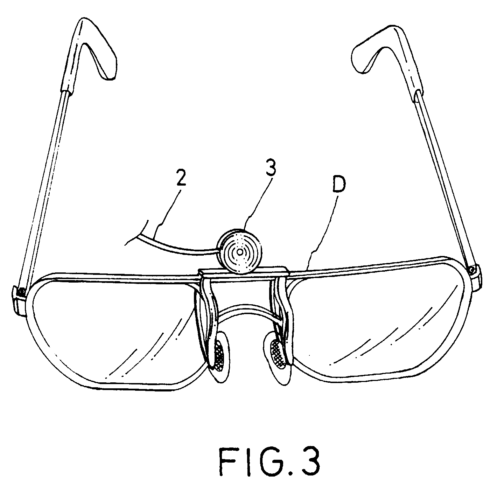

Referring to Fig. 3, in actual practice, since the CCD lens 3 and the camera body 1 are separated, the camera body 1 may be placed inside the user's pocket or clamped to the user's spectacle frame D. In this way, when the user wants to take a picture, he/she may instantly press the push button 11 so that the CCD lens 3 which is almost at eye level with the user's eyes may instantly take a picture unknowingly. There is no need to rely on the viewfinder or focus.

Besides, the connecting wire 2 and the CCD lens 3 may be stored inside the camera body 1 when not in use so as to facilitate carrying. The CCD camera according to the present invention includes ordinary cameras and video cameras.

In summary, the CCD camera of the present invention achieves instantaneous taking of pictures. It may be used on many occasions to catch pictures in a secret manner.

It will be appreciated that the references herein to CCD devices apply equally to other solid state devices in which a light image is converted into a pattern of electronic signals.

Although the present invention has been illustrated and described with reference to the preferred embodiment thereof, it should be understood that it is in no way limited to the details of such embodiment but is capable of numerous modifications within the scope of the appended claims.

## Claims

1. A CCD camera, comprising:
a camera body, said camera body being a box structure accommodating therein conventional circuits and memories, and having a conventional push button at an outer wall thereof, said camera body further having a hole at another wall thereof;
a connecting wire having therein lead wires, one end thereof being connected to the circuits inside said camera body while the other end thereof being connected to a CCD lens; and
said CCD lens, said CCD lens being separated from said camera body and being attached to the user by means of a connecting device.

2. A CCD camera as claimed in Claim 1, wherein said connecting device may be a clamping device secured to said CCD lens and to the user's spectacle frame.

3. A CCD camera as claimed in Claim 1, wherein said camera body may be provided with a recess for accommodating said CCD lens, with said connecting wire being led out therefrom.

4. A CCD camera as claimed in Claim 1, wherein camera body may be provided with a device for attaching to the waist of the user.

5. A CCD camera as claimed in Claim 1, wherein said connecting device may be tying bands or adhesive tapes.

6. A CCD camera as claimed in Claim 1, wherein said connecting device may be an adhesive agent.

7. An electronic camera comprising:
a body containing electronic control and memory means and having a manually operable means thereon for causing a photograph to be taken; and
a lens module separable from the body and provided with means for electrically connecting the module to the electronic control and memory means in the body;
wherein the lens module comprises an electronic imaging means and a lens for forming an image thereon.

8. A camera according to Claim 7, wherein the lens module is connected to the electronic control and memory means in the body by way of a cable.

9. A camera according to Claim 7 or 8, wherein the body also comprises electrical power supply means.
